(19) Europäisches Patentamt
European Patent Office
Office européen des brevets

(11) EP 2 962 413 B1

(12) **EUROPEAN PATENT SPECIFICATION**

(45) Date of publication and mention of the grant of the patent:
**11.12.2019 Bulletin 2019/50**

(21) Application number: **14757278.8**

(22) Date of filing: **07.01.2014**

(51) Int Cl.:
*H04B 15/02* (2006.01)    *H04J 11/00* (2006.01)
*H04L 25/02* (2006.01)    *H04L 25/03* (2006.01)
*H04L 27/01* (2006.01)

(86) International application number:
**PCT/KR2014/000153**

(87) International publication number:
**WO 2014/133260 (04.09.2014 Gazette 2014/36)**

(54) **A METHOD AND APPARATUS FOR CANCELLATING INTERFERENCE IN A WIRELESS COMMUNICATION SYSTEM**

VERFAHREN UND VORRICHTUNG ZUM UNTERDRÜCKEN VON INTERFERENZEN IN EINEM DRAHTLOSEN KOMMUNIKATIONSSYSTEM

PROCÉDÉ ET APPAREIL D'ANNULATION DES INTERFÉRENCES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 US 201313780618**

(43) Date of publication of application:
**06.01.2016 Bulletin 2016/01**

(73) Proprietor: **Samsung Electronics Co., Ltd. Suwon-si, Gyeonggi-do 443-742 (KR)**

(72) Inventors:
• **OK, Kwangman**
  **Richardson, TX 75082 (US)**
• **KANG, In-Yup**
  **Richardson, TX 75082 (US)**
• **Li, Linbo**
  **Richardson, TX 75082 (US)**
• **KALBASI, Reza**
  **Richardson, TX 75082 (US)**

(74) Representative: **Nederlandsch Octrooibureau P.O. Box 29720 2502 LS The Hague (NL)**

(56) References cited:
JP-A- 2009 505 523    KR-A- 20070 110 887
US-A1- 2006 109 938    US-A1- 2007 263 714
US-A1- 2008 089 455    US-A1- 2010 046 682
US-A1- 2010 046 682    US-B2- 7 565 111

• OLIVIER J C ET AL: "Single antenna interference cancellation for synchronised GSM networks using a widely linear receiver", 20070201, vol. 1, no. 1, 1 February 2007 (2007-02-01), pages 131-136, XP006028092,
• P. CHEVALIER ET AL: "New insights into optimal widely linear array receivers for the demodulation of BPSK, MSK, and GMSK signals corrupted by noncircular interferences-application to SAIC", IEEE TRANSACTIONS ON SIGNAL PROCESSING., vol. 54, no. 3, 1 March 2006 (2006-03-01), pages 870-883, XP055296010, US ISSN: 1053-587X, DOI: 10.1109/TSP.2005.862946

## Description

### Technical Field

A present invention relates to a method and apparatus for cancellating interference from a received signal for wireless communication in a wireless communication system.

### Background Art

Wireless communication systems typically employ one or more modulation schemes to communicate voice, data, and control information between the base station and a mobile terminal. A highly utilized wireless communication system is global system for mobile-communication (GSM). The Enhanced Rates for GSM Evolution (EDGE) has been formulated as a transitional standard between second generation (2G) and third generation (3G) wireless communication systems and beyond.

In cellular mobile communications systems like GSM/EDGE, co-channel interference (CCI) from cells using the same frequencies at the considered cell is an important capacity limiting factor. Since there are a limited number of available carriers, a more aggressive frequency reuse pattern has to be applied to augment the achievable throughput. Therefore, the capacity of the system becomes interference-limited.

In such conditions, capacity increases can only be obtained by enhanced algorithms in the mobile terminals, which are capable of operating in a more hostile interference scenario. This has brought new interests in interference cancellation techniques in mobile terminals. Efficient interference suppression can be achieved by multiple receive antennas, but due to the compact design of the modern mobile terminals and cost considerations, implementation can be inefficient,

Following documents are relevant prior art:

OLIVIER J. C. et al: "Single antenna interference cancellation for synchronised GSM networks using a widely linear receiver", IET Communications, vol. 1, no. 1, 1 February 2007, pages 131-136;
US 7 565 111 B2 (ONGGOSANUSI EKO N [US] et al) 21 July 2009;
US 2006/109938 A1 (CHALLA RAGHU [US] ET AL) 25 May 2006; and
US 2010/046682 A1 (SIKRI DIVAYDEEP [GB] ET AL) 25 February 2010.

### Disclosure of Invention

### Technical Problem

Thus, a need still remains for wireless communication system with interference cancellation mechanism to suppress the co-channel interference, estimate the communication channel, and improve performance of the receiver. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### Solution to Problem

The invention is defined in the independent claims. Advantageous embodiments are set out in the dependent claims. Aspects or embodiments that do not fall under the scope of the claims are useful to understand the invention.

### Brief Description of Drawings

FIG. 1 is a wireless communication system with interference cancellation mechanism in an embodiment of the present invention,
FIG. 2 is an exemplary block diagram of an iterative quasi-linear receiver in a first embodiment of the wireless communication system,
FIG. 3 is an exemplary block diagram of the wireless communication system,

FIG. 4 is a schematic view of the fields of the communication protocol such as a time division multiple access (TDMA) frame,

FIG. 5 is an exemplary block diagram of an iterative quasi-linear receiver in a second embodiment of the wireless communication system,

FIG. 6 is an exemplary block diagram of a quasi-linear receiver in a third embodiment of the of the wireless communication system,

FIG. 7 is a an exemplary block diagram of a quasi-linear receiver in a fourth embodiment of the of the wireless communication system,

FIG. 8 is an exemplary block diagram of an iterative quasi-linear receiver in a fifth embodiment of the wireless communication system,

FIG. 9 is an exemplary block diagram of a quasi-linear receiver in a sixth embodiment of the wireless communication system,

FIG. 10 is a detailed block diagram of the quasi-linear filter of FIG. 7,

Fig. 11 is a flow chart of a method of operation of a wireless communication system in an embodiment of the present invention.

## Best Mode for Carrying out the Invention

An embodiment of the present invention provides a system and method for wireless communications system employing an iterative quasi-linear receiver to cancel inter-symbol interference (ISI) and co-channel interference (CCI) to enable a widely linear - single antenna interference cancellation (WL-SAIC). The embodiment of the present invention applies iterative techniques to re-estimate the channel estimation and filter weights to improve the WL-SAIC performance. The wireless communication system can adapt for noise-limited and interference-limited environments to select an algorithm which provides the optimum performance to address the environment.

An embodiment of the present invention provides that the iterative quasi-linear receiver can be implemented with a quasi-linear filter for cancellation of ISI and CCI) followed by a slicer or a maximum likelihood equalizer. In order to optimize performance, the WL-SAIC can comprise filter weight estimations performed on the test sequence followed by the filter weight estimations refined by evaluating all of the bits of the selected burst for adjusting the WL-SAIC coefficients.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

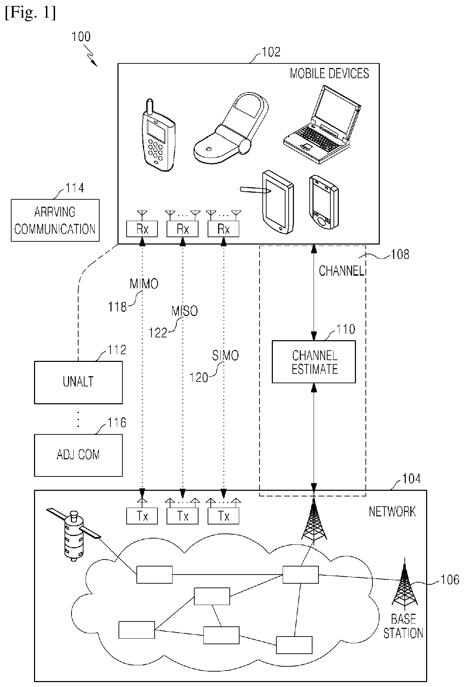

FIG. 1 is a wireless communication system with interference cancellation mechanism in an embodiment of the present invention.

Referring now to FIG. 1, therein is shown a wireless communication system 100 with interference cancellation mechanism in an embodiment of the present invention. The wireless communication system 100 includes a mobile device 102, such as a cellular phone or a notebook computer, connected to a network 104. The network 104 can include a system of wired or wireless communication devices that are connected to each other for enabling communication between devices.

For example, the network 104 can include a combination of wires, transmitters, receivers, antennas, towers, stations, repeaters, telephone network, servers, or client devices for a wireless cellular network. The network 104 can also include a combination of routers, cables, computers, servers, and client devices for various sized area networks.

The network 104 can include a base station 106 for directly linking and communicating with the mobile device 102. The base station 106 can receive wireless signals from the mobile device 102, transmit signals to the mobile device 102, process signals, or a combination thereof. The base station 106 can also relay signals between other base stations, components within the network 104, or a combination thereof.

The mobile device 102 can be connected to the network 104 through the base station 106. For example, the base station 106 can include or be with a cell tower, a wireless router, an antenna, a processing device, or a combination thereof being used to send signals to or receive signals from the mobile device 102, such as a smart phone or a laptop computer. The mobile device 102 can connect to and communicate with other devices, such as other mobile devices, servers, computers, telephones, or a combination thereof.

The base station 106 can be used to wirelessly exchange signals for communication, including voice signals of a telephone call or data representing a website and interactions therewith. The base station 106 can also transmit reference signals, training signals, error detection signals, error correction signals, header information, transmission format, protocol information, or a combination thereof.

Based on the communication method, such as global system for mobile-communication (GSM), Enhanced Rates for GSM Evolution (EDGE), second generation (2G), third generation (3G), or fourth generation (4G) standards, the communication signals can include reference portions, header portions, format portions, error correction or detection portion, or a combination thereof imbedded in the communicated information. The reference portions, header portions, format portions error correction or detection portion, or a combination thereof can include a predetermined bit, pulse, wave, symbol, or a combination thereof. The various portions can be embedded within the communicated signals at regular time intervals, frequency, code, or a combination thereof.

The mobile device 102 can communicate with the base station 106 through a channel 108. The channel 108 can be wireless, wired, or a combination thereof. The channel 108 can be a direct link between the mobile device 102 and the base station 106 or can include repeaters, amplifiers, or a combination thereof. For example, the channel 108 can include communication frequency, time slot, packet designation, transmission rate, channel code, or a combination thereof used for transmitting signals between the mobile device 102 and the base station 106.

The channel 108 and the effects thereof can be represented by a channel estimate 110. The channel estimate 110 can be a characterization of changes to signals caused by the channel 108. The channel estimate 110 can described to quantize reflection, loss, refraction, obstructions, or a combination thereof that a signal can experience while traversing between the base station 106 and the mobile device 102. The channel estimate 110 can further characterize interference that the mobile device 102 can experience from other transmitters, such as other mobile devices or other base stations, or from the movement of the mobile device 102.

For example, the base station 106 can transmit an unaltered transmission 112. The unaltered transmission(UNALT) 112 can change while traversing through the channel 108 due to the qualities therein, such as from delayed signal reflections from various buildings, from interferences other nearby transmitting sources, from the Doppler Effect experienced when the mobile device 102 is in transit, or a combination thereof. The mobile device 102 can receive an arriving communication 114, which is the unaltered transmission 112 that has been changed due to qualities of the channel 108.

The mobile device 102 can determine the channel estimate 110 from the arriving communication 114. For example, the mobile device 102 can compare the information in the reference or training portion to the standardized or intended information in the reference or training portion to estimate the channel estimate 110.

The wireless communication system 100 can employ link adaptation methods for controlling the communication between devices. Link adaptation method can have the mobile device 102 feedback and report information associated with the channel 108 to the base station 106. The base station 106 can use the feedback information to adjust various aspects of the communication with the mobile device 102.

The wireless communication system 100 employing link adaptation method can inherently have a delay between characterizing the channel 108 based on a communication, feeding information back to the base station 106, and making the adjustment based on the communication. The delay can cause the adjustments to be incorrect due to changes in the channel 108 during the delay.

For example, the mobile device 102 can characterize the channel 108 based on the arriving communication 114 corresponding to the unaltered transmission 112. The characterization of the channel 108 will represent the channel estimate 110 at the time of receiving the arriving communication 114. The channel 108 can change during the time necessary to determine the channel estimate 110, send feedback information to the base station 106, and have the base station 106 make adjustments accordingly. Hence, the adjustments made based on the arriving communication 114 may not be relevant due to changes in the channel 108 at the time of transmitting an adjusted communication(ADJ COM) 116.

For illustrative purposes, the base station 106 will be described as transmitting signals and the mobile device 102 as receiving and replying to the transmitted signals. However, it is understood that both the mobile device 102 and the base station 106 can each transmit and receive signals.

Also for illustrative purposes, the wireless communication system 100 will be described as employing a single-input single-output (SISO) scheme 108 for communicating with one antenna on the transmitter and one antenna on the receiver. However, it is understood that the wireless communication system 100 can employ a multiple-input multiple-output (MIMO) scheme 118 including a single-input multiple-output (SIMO) scheme 120 and a multiple-input single-output (MISO) scheme 122. The MIMO 118 can have one or more antennas on the transmitter end, at the base station 106, communicating with one or more antennas on the receiver end, at the mobile device 102.

The MIMO scheme 118 can include the SIMO scheme 120 having a single antenna at the base station 106 communicating with multiple antennas on the mobile device 102. The MIMO scheme 118 can further include the MISO scheme 122 having multiple antennas at the base station 106 communicating with a single antenna on the mobile device 102.

For further illustrative purposes, the mobile device 102 will be described as directly communicating with the base station 106. However, it is understood that the mobile device 102 can communicate with the base station 106 through other devices, such as a repeater, another mobile device, a router, or a combination thereof. It is also understood that the mobile device 102 can access the network 104 through devices other than the base station 106.

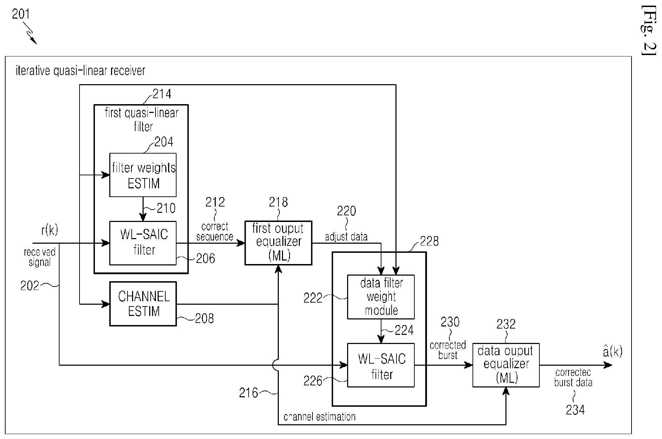

FIG. 2 is an exemplary block diagram of an iterative quasi-linear receiver in a first embodiment of the wireless communication system.

Referring now to FIG. 2, therein is shown an exemplary block diagram of an iterative quasi-linear receiver 201 in a first embodiment of the wireless communication system 100. The exemplary block diagram of the iterative quasi-linear receiver 201 depicts a received signal 202, such as a radio frequency signal meeting the Enhanced Rates for EDGE standard, coupled to a filter weights estimation module(ESTIM) 204, such as a least square filter weights module, a WL_SAIC filter 206, and a channel ESTIM 208.

The Enhanced Rates for EDGE has been is a transitional standard between 2G and 3G systems. Both Gaussian Minimum Shift Keying (GMSK) and eight Phase Shift Keying (8PSK) modulations are used in EDGE standard, and the modulation type can be changed from burst to burst. GMSK is a non-linear modulation used in GSM and it can be approximated with a 2-level linear modulation with a $\pi/2$ rotation. Similarly, the 8PSK modulation in EDGE is an 8-level modulation with 3 $\pi/8$ rotation.

By way of an example the received signal 202 can be a GMSK transmission having a co-channel interference transmission that is assumed to be either GMSK or 8PSK modulation, which is very similar to the desired signal. The received signal 202 can be represented by:

$$r(n) = \sum_{k=0}^{L_h-1} h(k)a(n-k) + \sum_{k=0}^{L_g-1} g(k)b(n-k) + n(k)$$

Where $r(n)$ is a composite of the actual data $a(k)$ modified by the channel $h(k)$ and interference from an adjacent communication $b(k)$ modified by the co-channel $g(k)$ plus an additive white Gaussian noise (AWGN) factor $n(k)$. Due to the physical nature of their make-up, both the channel $h(k)$ and the co-channel $g(k)$ are assumed to be constant during a single transmitted burst of the unaltered transmission 112 of FIG. 1.

The received signal 202 can contain a test sequence of 26 symbols $y(k)$ positioned at the center of a selected burst. The interference plus noise term $z(k)$ can be used for calibrating the filter weights estimation module 204. The filter weights estimation module 204 can calculate filter weights 210 which can be calculated by minimizing the least squared error $e$ as calculated by:

$$e = \frac{1}{26-2d} \sum_{k=d+1}^{26-d} \left\| y(k) - \hat{z}(k+k0) \right\|^2$$

Where $d$ is a number of symbols within the test sequence that could be subject to inter-symbol interference, such as 5. The term $k_0$ represents the decision delay relative to the symbol boundary. The term $\hat{z}(k + k_0)$ represents the interference plus noise offset by a time delay and modified by the channel 112 of FIG. 1 and can be calculated as:

$$\hat{z}(k+k_0) = \sum_{l=0}^{L_h-1} \hat{h}(l)s(k-l+k_0)$$

Where the term $\hat{h}(l)$ represents the channel related delay and the term $s(k\text{-}l\text{+}k_0)$ represents the symbol skew caused by the channel 112. The correlation terms, based on the test sequence, can be calculated by:

$$\mathbf{\Phi}_{rr} = \frac{1}{26 - 2d} \sum_{k=d+1}^{26-d} \mathbf{r}_k \mathbf{r}_k^{H}$$

$$\mathbf{\Phi}_{rr^*} = \frac{1}{26 - 2d} \sum_{k=d+1}^{26-d} \mathbf{r}_k \mathbf{r}_k^{T}$$

$$\varphi_{rz}(k_0) = \frac{1}{26 - 2d} \sum_{k=d+1}^{26-d} \mathbf{r}_k z^*(k + k_0)$$

$$\varphi_{r^*z}(k_0) = \frac{1}{26 - 2d} \sum_{k=d+1}^{26-d} \mathbf{r}^*_k z^*(k + k_0)$$

And the filter weights 210 are then calculated by:

$$\mathbf{w}_1 = [\mathbf{\Phi}_{rr} - \mathbf{\Phi}_{rr^*} \mathbf{\Phi}^{-*}_{rr} \mathbf{\Phi}^*_{rr^*}]^{-1} [\varphi_{rz} - \mathbf{\Phi}_{rr^*} \varphi^{-*}_{rr} \varphi_{r^*z}]$$

and

$$\mathbf{w}_2 = [\mathbf{\Phi}_{rr} - \mathbf{\Phi}^*_{rr^*} \mathbf{\Phi}^{-1}_{rr} \mathbf{\Phi}_{rr^*}]^{-1} [\varphi_{r^*z} - \mathbf{\Phi}^*_{rr^*} \mathbf{\Phi}^{-1}_{rr} \varphi_{rz}]$$

The filter weights 210, from the filter weights ESTIM 204, can be coupled between the filter weights ESTIM 204 and the WL_SAIC filter 206. The WL_SAIC filter 206 can perform correction of the inter-symbol interference and co-channel interface that is part of the received signal 202. The WL_SAIC filter 206 can be a minimum mean squared error (MMSE) filter that can adapt using the filter weights 210 and generating further refinements applied directly to the received signal 202. The mean squared error (MSE) can be calculated by:

$$MSE = E\left[\|y(k) - z(k + k_0)\|^2\right]$$

The desired signal and interference are independently and identically distributed (i.i.d.) and independent, the correlation functions based on the ensemble average are derived by:

$$\mathbf{\Phi}_{rr} = E[\mathbf{r}_k \mathbf{r}_k^{H}] = \mathbf{HH}^H + \mathbf{GG}^H + \sigma^2 \mathbf{I}_{N_f}$$

$$\mathbf{\Phi}_{rr^*} = E[\mathbf{r}_k \mathbf{r}_k^{T}] = \mathbf{HH}^T + \mathbf{GG}^T$$

$$\varphi_{rz}(k_0) = E[\mathbf{r}_k z^*(k+k_0)] = \mathbf{H}\mathbf{C}_s \mathbf{h}^*$$

$$\varphi_{r^* z}(k_0) = E[\mathbf{r}_k^* z^*(k+k_0)] = \mathbf{H}^* \mathbf{C}_s \mathbf{h}^*$$

The term $C_s$ can be calculated by:

$$\mathbf{C}_s = \begin{bmatrix} \mathbf{0}_{(k_0+L-1)\times L} \\ \mathbf{I}_L \\ \mathbf{0}_{(N_f-L-k_0)\times L} \end{bmatrix}$$

The Interference covariance matrix estimation for the WL_SAIC filter 206 can be estimated as:

$$\mathbf{C}^1_U = \mathbf{G}\mathbf{G}^H + \sigma^2 \mathbf{I}_{N_f} \approx \frac{1}{26-d} \sum_{k=d+1}^{26-d} \mathbf{U}_k \mathbf{U}_k^H$$

$$\mathbf{C}^2_U = \mathbf{G}\mathbf{G}^T \approx \frac{1}{26-d} \sum_{k=d+1}^{26-d} \mathbf{U}_k \mathbf{U}_k^T$$

Where the term $U_k$ can be related to the received symbol $r(n)$ and the interference plus noise term $z(n)$ as sampled through the test sequence symbols $k$ by:

$$\mathbf{U}_k = \mathbf{r}_k - \hat{\mathbf{z}}_k$$

Where $\hat{z}_K =[z(k),...,z(k+N_f+1)]$ is the interference estimated vector that can be applied to the received signal 202 in order to produce a corrected sequence 212. The combination of the filter weights ESTIM 204 and the WL_SAIC filter 206 can form a first quasi-linear filter 214. The first quasi-linear filter 214 can provide correction for the ISI CCI monitored during the test sequence provide in the center of the burst. Since the channel 112 and the CCI are constant during the GSM burst.

The channel ESTIM 208 can be implemented as MMSE equalizer. The MMSE receiver algorithms formulation, assuming the length of the desired and interference channel are equal to L, we calculate $Nf\times(Nf+L-1)$ matrices as:

$$\mathbf{H}_0 = \begin{bmatrix} h_0(L-1) & \cdots & h_0(0) & \cdots & \cdots \\ \cdots & h_0(L-1) & \cdots & h_0(0) & \cdots \\ \vdots & \vdots & \vdots & \vdots & \vdots \\ \cdots & \cdots & h_0(L-1) & \cdots & h_0(0) \end{bmatrix}$$

and

$$\mathbf{H}_1 = \begin{bmatrix} h_1(L-1) & \cdots & h_1(0) & \cdots & \cdots \\ \cdots & h_1(L-1) & \cdots & h_1(0) & \cdots \\ \vdots & \vdots & \vdots & \vdots & \vdots \\ \cdots & \cdots & h_1(L-1) & \cdots & h_1(0) \end{bmatrix}$$

The gain matrices can be exemplified as:

$$G_0 = \begin{bmatrix} g_0(L-1) & \cdots & g_0(0) & \cdots & \cdots \\ \cdots & g_0(L-1) & \cdots & g_0(0) & \cdots \\ \vdots & \vdots & \vdots & \vdots & \vdots \\ \cdots & \cdots & g_0(L-1) & \cdots & g_0(0) \end{bmatrix}$$

and

$$G_1 = \begin{bmatrix} g_1(L-1) & \cdots & g_1(0) & \cdots & \cdots \\ \cdots & g_1(L-1) & \cdots & g_1(0) & \cdots \\ \vdots & \vdots & \vdots & \vdots & \vdots \\ \cdots & \cdots & g_1(L-1) & \cdots & g_1(0) \end{bmatrix}$$

The received signal 202 can be described by:

$$\mathbf{r}_m = \mathbf{H}\mathbf{a}_m + \mathbf{G}\mathbf{b}_m + \mathbf{n}$$

Where $r_m$ can be a received symbol which includes the variable $a_m$ represents a symbol of the arriving communication 114 of FIG. 1 and $b_m$ represents an interference symbol that corrupts the received signal 202. These variables can be described as:

$$\mathbf{a}_m = [a(m-L+1),...,a(m+N_f-1)]$$

$$\mathbf{b}_m = [b(m-L+1),...,b(m+N_f-1)]$$

The variable H represents the effects of the channel 112 where H=[H1, H2] and the variable G represents a gain factor applied to the interference symbol represented by G=[G1, G2].

The channel ESTIM 208 can calculate a channel estimation 216. The channel estimation 216 and the corrected sequence 212 are coupled to a first output equalizer 218, such as a maximum likelihood(ML) equalizer. The first output equalizer 218 can apply additional correction to the received signal 202 based on the correction derived from the test sequence symbols by the first quasi-linear filter 214.

The first output equalizer 218 can be restricted to operate on the test sequence, which represents a 26 symbol reference field positioned in the middle of the selected burst. The test sequence can induce a direct current (DC) offset that can corrupt the decoding of encrypted data that can be present in data fields surrounding the test sequence. The encrypted data is known to be balanced by the encryption process to eliminate the DC offset issue. The output of the first output equalizer 218 can be an adjusted data 220 that can accurately reflect the 26 symbols of the test sequence.

The adjusted data 220 and the received signal 202 can be coupled to a data filter weights module 222, such as a least square data module, configured to calculate data filter weights 224 for the 148 symbols of the selected burst. The data filter weights module 222 can calculate the data filter weights 224 in a manner similar to the filter weights ESTIM 204, with the exception that the calculation includes all of the symbols in the selected burst. By way of example, the least squared data module 222 can calculate the data filter weights 224 by minimizing the least squared error $e$ as calculated by:

$$e = \frac{1}{148} \sum_{k=0}^{147} \left\| y(k) - \hat{z}(k + k0) \right\|^2$$

The least squared data module 222 can substitute the adjusted data 220 for the test sequence 414 embedded in the received signal 202 when calculating the data filter weights 224. The least squared data module 222 can calculate the correlation terms in a similar way to the filter weights ESTIM 204, with the exception that the calculation includes all of the symbols in the selected burst, can be calculated by:

$$\mathbf{\Phi}_{rr} = \frac{1}{148} \sum_{k=0}^{147} \mathbf{r}_k \mathbf{r}_k^{H}$$

$$\mathbf{\Phi}_{rr^*} = \frac{1}{148} \sum_{k=0}^{147} \mathbf{r}_k \mathbf{r}_k^{T}$$

$$\varphi_{rz}(k_0) = \frac{1}{148} \sum_{k=0}^{147} \mathbf{r}_k z^*(k + k_0)$$

$$\varphi_{r^*z}(k_0) = \frac{1}{148} \sum_{k=0}^{147} \mathbf{r}^*_k z^*(k + k_0)$$

The data filter weights 224 can be coupled to a data WL-SAIC filter 226. The data WL-SAIC filter 226 can calculate the minimum MSE in a manner similar to the WL_SAIC filter 206, with the exception that the entire content of the selected burst is analyzed causing the Interference covariance matrix estimation to be calculated by:

$$\mathbf{C}^1_U = \mathbf{G}\mathbf{G}^H + \sigma^2 \mathbf{I}_{N_f} \approx \frac{1}{148} \sum_{k=0}^{147} \mathbf{U}_k \mathbf{U}_k^{H}$$

$$\mathbf{C}^2_U = \mathbf{G}\mathbf{G}^T \approx \frac{1}{148} \sum_{k=0}^{147} \mathbf{U}_k \mathbf{U}_k^{T}$$

The combination of the least squared data module 222 and the data WL-SAIC filter 226 can comprise a data quasi-linear filter 228. The data quasi-linear filter 228 can perform a correction of the entire content of the selected burst.
The correction of the received signal 202 by the data WL-SAIC filter 226 can produce a corrected burst 230. The corrected burst 230 can be coupled to a data output equalizer 232, such as a maximum likelihood equalizer. The data output equalizer 232 can apply additional correction to the received signal 202 based on the estimated channel 216 and the correction derived from the entire content of the selected burst by the data quasi-linear filter 228.
The data output equalizer 232 can be configured to output corrected burst data 234 that can accurately reflect the 148 symbols of the selected burst. The corrected burst data 234 can deliver the encrypted data within the selected burst for utilization within the mobile device 102 of FIG. 1. The mobile device 102 can utilize the encrypted data for display or audio purposes.

It has been discovered that the iterative quasi-linear receiver 201 can apply quasi-linear processing, through the first quasi-linear filter 214 and the data quasi-linear filter 228, to the received signal 202 in order to improve reliable receipt of the unaltered transmission 112 of FIG. 1 in noise-limited and interference-limited environments. The iterative quasi-linear receiver 201 can correct ISI and CCI to a degree not possible in blind conversion receivers. The application of the iterative quasi-linear receiver 201 can allow increased capacity of the wireless communication system 100 of FIG. 1 because an increase in frequency, which will provide time for more of the selected bursts, is now possible without increasing the error rates in the arriving communication 114.

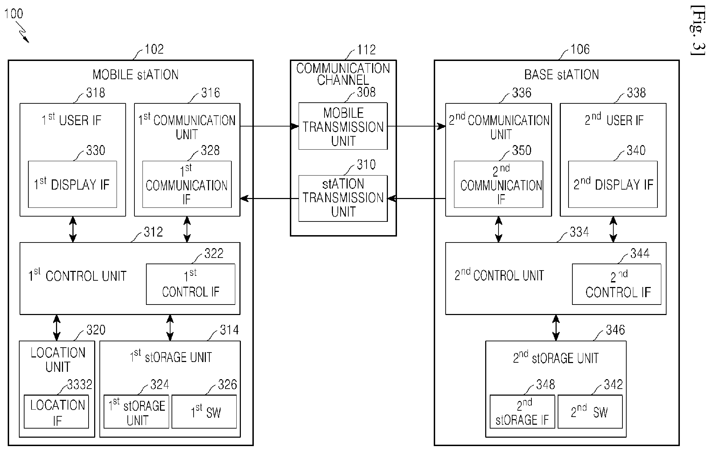

FIG. 3 is an exemplary block diagram of the wireless communication system.

Referring now to FIG. 3, therein is shown an exemplary block diagram of the wireless communication system 100. The wireless communication system 100 can include the designated mobile station 102, the communication channel 112, and the base station 106. The designated mobile station 102 can communicate within the network 104 of FIG. 1, such as the base station 106, other mobile stations, or other users, over the communication channel 112.

For illustrative purposes, the wireless communication system 100 will be described as having the designated mobile station 102 interacting with the base station 106 through the communication channel 112. It is understood that the designated mobile station 102 can communicate with other stations in the network 104 of FIG. 1 and with other components in the network 104.

For example, the designated mobile station 102 can communicate with multiple base stations for handovers. Also, for example, the designated mobile station 102 can communicate with cellular phones in other areas through the base station 106 and the network 104.

The designated mobile station 102 can send information in a mobile transmission unit 308 over the communication channel 112 to the base station 106. The base station 106 can send information in a station transmission unit 310 over the communication channel 112 to the designated mobile station 102.

For brevity of description in this embodiment of the present invention, the designated mobile station 102 will be described as a client device and the network base station 106 will be described as communication base station, such as a communications tower. The present invention is not limited to this selection for the type of devices. The selection is an example of the present invention.

The designated mobile station 102 can include a first(1$^{st}$) control unit 312, a first storage unit 314, a first communication unit 316, a first user interface(IF) 318, and a location unit 320. The designated mobile station 102 can be similarly described by the designated mobile station 102. The first control unit 312 can include a first control IF 322. The first storage unit 314 can include a first storage IF 324.

The first control unit 312 can execute a first software(SW) 326 to provide the intelligence of the wireless communication system 100. The first control unit 312 can operate the first user IF 318 to display information generated by the wireless communication system 100. The first control unit 312 can also execute the first SW 326 for the other functions of the wireless communication system 100, including receiving location information from the location unit 320. The first control unit 312 can further execute the first SW 326 for interaction with the communication channel 112 of FIG. 1 via the first communication unit 316.

The first control unit 312 can be implemented in a number of different manners. For example, the first control unit 312 can be a processor, an embedded processor, a microprocessor, a hardware control logic, a hardware finite state machine, a digital signal processor, or a combination thereof.

The first control unit 312 can include the first control IF 322. The first control interface 322 can be used for communication between the first control unit 312 and other functional units in the designated mobile station 102. The first control IF 322 can also be used for communication that is external to the designated mobile station 102.

The first control IF 322 can receive information from the other functional units or from external sources, or can transmit information to the other functional units or to external destinations. The external sources and the external destinations refer to sources and destinations external to the designated mobile station 102.

The first control IF 322 can be implemented in different ways and can include different implementations depending on which functional units or external units are being interfaced with the first control IF 322. For example, the first control IF 322 can be implemented with a pressure sensor, an inertial sensor, a microelectromechanical system, optical circuitry, waveguides, wireless circuitry, wire line circuitry, or a combination thereof.

The first storage unit 314 can store the first SW 326. The first storage unit 314 can also store the relevant information, such as advertisements, points of interest, navigation routing entries, or any combination thereof.

The first storage unit 314 can be a volatile memory, a nonvolatile memory, an internal memory, an external memory, or a combination thereof. For example, the first storage unit 314 can be a non-volatile storage such as nonvolatile random access memory, Flash memory, disk storage, or a volatile storage such as static random access memory.

The first storage unit 314 can include the first storage interface 324. The first storage IF 324 can be used for communication between the location unit 320 and other functional units in the designated mobile station 102. The first storage IF 324 can also be used for communication that is external to the designated mobile station 102.

The first storage IF 324 can receive information from the other functional units or from external sources, or can transmit information to the other functional units or to external destinations. The external sources and the external destinations refer to sources and destinations external to the designated mobile station 102.

The first storage IF 324 can include different implementations depending on which functional units or external units are being interfaced with the first storage unit 314. The first storage IF 324 can be implemented with technologies and techniques similar to the implementation of the first control IF 322.

The first communication unit 316 can enable external communication to and from the designated mobile station 102. For example, the first communication unit 316 can permit the designated mobile station 102 to communicate with the network base station 106, an attachment, such as a peripheral device or a computer desktop, and the communication channel 112.

The first communication unit 316 can also function as a communication hub allowing the designated mobile station 102 to function as part of the communication channel 112 and not limited to be an end point or terminal unit to the communication channel 112. The first communication unit 316 can include active and passive components, such as microelectronics or an antenna, for interaction with the communication channel 112.

The first communication unit 316 can include a first communication interface 328. The first communication IF 328 can be used for communication between the first communication unit 316 and other functional units in the designated mobile station 102. The first communication IF 328 can receive information from the other functional units or can transmit information to the other functional units. The receiver portion of the first communication IF 328 can include a single antenna (not shown) that can be wirelessly coupled to the base station 106 through the channel 112.

The first communication IF 328 can include different implementations depending on which functional units are being interfaced with the first communication unit 316. The first communication IF 328 can be implemented with technologies and techniques similar to the implementation of the first control IF 322.

The first user IF 318 allows a user to interface and interact with the designated mobile station 102. The first user IF 318 can include an input device and an output device. Examples of the input device of the first user IF 318 can include a keypad, a touchpad, soft-keys, a keyboard, a microphone, or any combination thereof to provide data and communication inputs.

The first user IF 318 can include a first display IF 330. Examples of the output device of the first user IF 318 can include the first display IF 330. The first display IF 330 can include a display, a projector, a video screen, a speaker, or any combination thereof.

The location unit 320 can generate location information, current heading, current acceleration, and current speed of the designated mobile station 102, as examples. The location unit 320 can be implemented in many ways. For example, the location unit 320 can function as at least a part of GPS, an inertial navigation system, a cellular-tower location system, a pressure location system, or any combination thereof. Also, for example, the location unit 320 can utilize components such as an accelerometer or GPS receiver.

The location unit 320 can include a location IF 332. The location interface 332 can be used for communication between the location unit 320 and other functional units in the designated mobile station 102. The location IF 332 can also be used for communication that is external to the designated mobile station 102.

The location IF 332 can receive information from the other functional units or from external sources, or can transmit information to the other functional units or to external destinations. The external sources and the external destinations refer to sources and destinations external to the designated mobile station 102.

The location IF 332 can include different implementations depending on which functional units or external units are being interfaced with the location unit 320. The location IF 332 can be implemented with technologies and techniques similar to the implementation of the first control unit 312.

For illustrative purposes, the designated mobile station 102 is shown with the partition having the first control unit 312, the first storage unit 314, the first user interface 318, the first communication unit 316, and the location unit 320 although it is understood that the wireless communication system 100 can have a different partition. For example, the first SW 326 can be partitioned differently such that some or all of its function can be in the first control unit 312, the location unit 320, and the first communication unit 316. Also, the designated mobile station 102 can include other functional units not shown in FIG. 2 for clarity.

The functional units in the designated mobile station 102 can work individually and independently of the other functional units. The designated mobile station 102 can work individually and independently from the network base station 106 and the communication channel 112.

The base station 106 can be optimized for implementing the present invention in a multiple device embodiment with the designated mobile station 102. The base station 106 can provide the additional or higher performance processing power compared to the designated mobile station 102. The base station 106 can include a second control unit 334, a second communication unit 336, and a second user IF 338.

The second user IF 338 allows a user to interface and interact with the base station 106. The second user IF 338 can include an input device and an output device. Examples of the input device of the second user IF 338 can include a keypad, a touchpad, soft-keys, a keyboard, a microphone, or any combination thereof to provide data and communication inputs. Examples of the output device of the second user interface 338 can include a second display IF 340. The second display IF 340 can include a display, a projector, a video screen, a speaker, or any combination thereof.

The second control unit 334 can execute a second SW 342 to provide the intelligence of the base station 106 of the wireless communication system 100. The second SW 342 can operate in conjunction with the first SW 326. The second control unit 334 can provide additional performance compared to the first control unit 312.

The second control unit 334 can operate the second user IF 338 to display information. The second control unit 334 can also execute the second SW 342 for the other functions of the wireless communication system 100, including operating the second communication unit 336 to communicate with the designated mobile station 102 over the communication channel 112.

The second control unit 334 can be implemented in a number of different manners. For example, the second control unit 334 can be a processor, an embedded processor, a microprocessor, a hardware control logic, a hardware finite state machine, a digital signal processor, or a combination thereof.

The second control unit 334 can include a second controller IF 345. The second controller IF 345 can be used for communication between the second control unit 334 and other functional units in the network base station 106. The second controller IF 345 can also be used for communication that is external to the network base station 106.

The second controller IF 345 can receive information from the other functional units or from external sources, or can transmit information to the other functional units or to external destinations. The external sources and the external destinations refer to sources and destinations external to the network base station 106.

The second controller IF 345 can be implemented in different ways and can include different implementations depending on which functional units or external units are being interfaced with the second controller IF 345. For example, the second controller IF 344 can be implemented with a pressure sensor, an inertial sensor, a microelectromechanical system, optical circuitry, waveguides, wireless circuitry, wire line circuitry, or a combination thereof.

A second storage unit 346 can store the second SW 342. The second storage unit 346 can also store the relevant information, such as phone numbers, identification information, information for multiple access, such as code, frequency, or time slot, advertisements, points of interest, navigation routing entries, or any combination thereof. The second storage unit 346 can be sized to provide the additional storage capacity to supplement the first storage unit 314.

For illustrative purposes, the second storage unit 346 is shown as a single element, although it is understood that the second storage unit 346 can be a distribution of storage elements. Also for illustrative purposes, the wireless communication system 100 is shown with the second storage unit 346 as a single hierarchy storage system, although it is understood that the wireless communication system 100 can have the second storage unit 346 in a different configuration. For example, the second storage unit 346 can be formed with different storage technologies forming a memory hierarchal system including different levels of caching, main memory, rotating media, or off-line storage.

The second storage unit 346 can be a volatile memory, a nonvolatile memory, an internal memory, an external memory, or a combination thereof. For example, the second storage unit 346 can be a nonvolatile storage such as nonvolatile random access memory, Flash memory, disk storage, or a volatile storage such as static random access memory.

The second storage unit 346 can include a second storage interface 348. The second storage IF 348 can be used for communication between the location unit 320 and other functional units in the base station 106. The second storage IF 348 can also be used for communication that is external to the base station 106.

The second storage IF 348 can receive information from the other functional units or from external sources, or can transmit information to the other functional units or to external destinations. The external sources and the external destinations refer to sources and destinations external to the network base station 106.

The second storage IF 348 can include different implementations depending on which functional units or external units are being interfaced with the second storage unit 346. The second storage IF 348 can be implemented with technologies and techniques similar to the implementation of the second controller IF 345.

The second communication unit 336 can enable external communication to and from the base station 106. For example, the second communication unit 336 can permit the base station 106 to communicate with the designated mobile station 102 over the communication channel 112.

The second communication unit 336 can also function as a communication hub allowing the base station 106 to function as part of the communication channel 112 and not limited to be an end point or terminal unit to the communication channel 112. The second communication unit 336 can include active and passive components, such as microelectronics or an antenna, for interaction with the communication channel 112.

The second communication unit 336 can include a second communication interface 350. The second communication interface 350 can be used for communication between the second communication unit 336 and other functional units in the network base station 106. The second communication IF 350 can receive information from the other functional units or can transmit information to the other functional units.

The second communication IF 350 can include different implementations depending on which functional units are being interfaced with the second communication unit 336. The second communication IF 350 can be implemented with technologies and techniques similar to the implementation of the second controller IF 345

The first communication unit 316 can couple with the communication channel 112 to send information to the network base station 106 in the mobile transmission unit 308. The network base station 106 can receive information in the second communication unit 336 from the mobile transmission unit 308 of the communication channel 112.

The second communication unit 336 can couple with the communication channel 112 to send information to the designated mobile station 102 in the station transmission unit 310. The designated mobile station 102 can receive information in the first communication unit 316 from the station transmission unit 310 of the communication channel 112. The wireless communication system 100 can be executed by the first control unit 312, the second control unit 334, or a combination thereof.

For illustrative purposes, the network base station 106 is shown with the partition having the second user IF 338, the second storage unit 346, the second control unit 334, and the second communication unit 336, although it is understood that the network base station 106 can have a different partition. For example, the second SW 342 can be partitioned differently such that some or all of its function can be in the second control unit 334 and the second communication unit 336.

The functional units in the network base station 106 can work individually and independently of the other functional units. The network base station 106 can work individually and independently from the designated mobile station 102 and the communication channel 112.

For illustrative purposes, the wireless communication system 100 is described by operation of the designated mobile station 102 and the network base station 106. It is understood that the designated mobile station 102 and the network base station 106 can operate any of the modules and functions of the wireless communication system 100. For example, the designated mobile station 102 is described to operate the location unit 320, although it is understood that the network base station 106 can also operate the location unit 320.

The modules described in this application can be hardware implementation or hardware accelerators in the first control module 312 or in the second control module 334. The modules can also be hardware implementation or hardware accelerators within the first device 102 or in the network base station 106 but outside of the first control module 312 or the second control module 334, respectively.

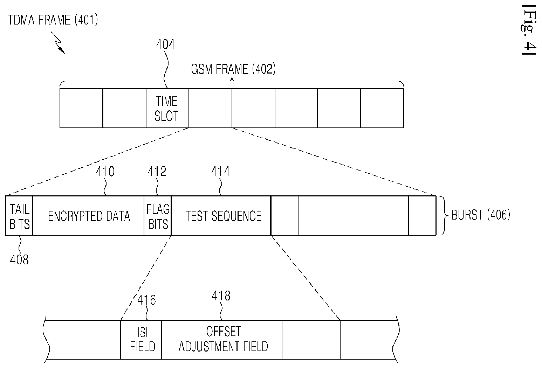

FIG. 4 is a schematic view of the fields of the communication protocol such as a TDMA frame.

Referring now to FIG. 4, therein is shown a schematic view of the fields of the communication protocol such as a TDMA frame 401. As an example, the schematic view of the fields of the communication protocol such as a TDMA frame 401 depicts a global system for mobile-communication (GSM) frame 402 in which there are eight instances of a time slot 404. Each of the time slot 404 can include communication data for an individual user (not shown). The time slot 404 can include one of four formats for the communication data within in the time slot 404. The data rate of each of the time slot 404 is 270.833 kilo-bits per second (kbps).

A selected burst 406, such as a GSM burst, is set to have a fixed time of 577 $\mu s$ which provides for a standard transmission of 148 symbols within the selected burst 406. The selected burst 406 can have four different formats including a normal burst, a frequency correction burst, a synchronization burst, or a random access burst. Since the normal burst is most commonly used to transport the user data, the selected burst 406 is shown to have the normal burst format.

The selected burst 406 is specified to have tail bits 408 at the beginning and the end of the selected burst 406. The tail bits 408 each contain 3 symbols that allow time for the input buffer 204 of FIG. 2 to power up and power down for processing the selected burst 406. The selected burst 406 will remain allocated to the individual user (not shown) as long as the communication sequence lasts. The selected burst 406 will be allocated in the same instance of the time slot 404 of each of the subsequent instances of the GSM frame 402.

The selected burst 406 contains two fields of an encrypted data 410. The encrypted data 410 contains 57 symbols of the communication data for the individual user. A flag bit 412 is located between both fields of the encrypted data 410 and a test sequence 414. The flag bit 412 is a single symbol that is used to indicate whether the content of the encrypted data 410 is communication data or control data.

The test sequence 414 is a 26 symbol field used to calibrate the iterative quasi-linear receiver 201 of FIG. 2. The test sequence 414 can include an inter-symbol interference (ISI) field 416 and an offset adjustment field 418. The offset adjustment field 418 can include 16 symbols with the remainder of the test sequence 414 split between the ISI field 416 located on either side of the offset adjustment field 418.

It has been discovered that the offset adjustment field 418 can be used by the channel estimation module 208 of FIG. 2, the first quasi-linear filter 214 of FIG. 2, and data quasi-linear filter 228 of FIG. 2 to reduce the baseband signal processing complexity and decrease the power consumption of the wireless communication system 100 of FIG. 1 by calculating filter weights for every symbol in the selected burst 406 including the test sequence 414.

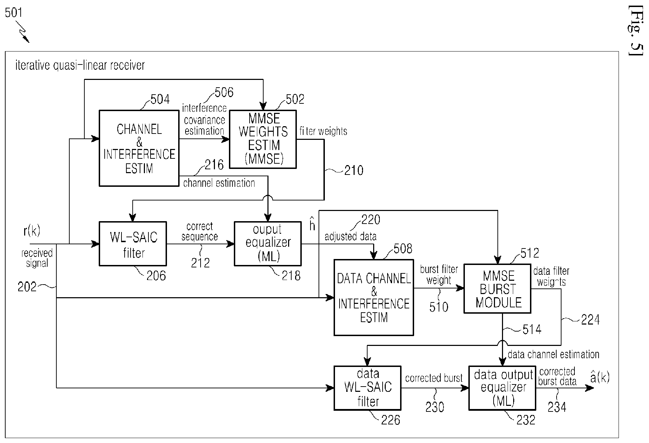

FIG. 5 is an exemplary block diagram of an iterative quasi-linear receiver in a second embodiment of the wireless communication system.

Referring now to FIG. 5, therein is shown an exemplary block diagram of an iterative quasi-linear receiver 501 in a second embodiment of the wireless communication system 100. The exemplary block diagram of the iterative quasi-linear receiver 501 depicts the received signal 202, such as a radio frequency signal meeting the Enhanced Rates for GSM Evolution (EDGE) standard, coupled to a filter weights ESTIM 502, such as a MMSE module, the WL_SAIC filter 206, and a channel and interference ESTIM504.

The Filter weights ESTIM 502 can be coupled to the received signal 202 as well as an interference covariance estimation 506 from the channel and interference ESTIM 504. The interference covariance estimation 506 is calculated by the process identified in equation (9) listed above. The channel and interference ESTIM 504 can also provide the channel estimation 216. The channel estimation 216 and the interference covariance estimation 506 are calculated for the test sequence 414 of FIG. 4. The Filter weights ESTIM 502 can calculate the filter weights 210 that can adjust the WL_SAIC filter 206 for providing the corrected sequence 212 from the received signal 202.

The corrected sequence 212 can be coupled to the output equalizer 218. The output equalizer 218 processes the corrected sequence 212 by applying the filter weights 210 to produce the adjusted data 220 that can accurately reflect the 26 symbols of the test sequence 414.

The adjusted data 220 can provide a calibration sequence for a data channel and interference estimation module 508 to calculate a burst filter weight 510. The burst filter weight 510 can be coupled to a MMSE burst module 512. The burst filter weight 510 can be combined with the calculation of the minimum MSE in a manner similar to the calculation of the mean square error (MSE) of equation 6.

The MMSE burst module 512 can calculate the data filter weights 224 for adjusting the data WL-SAIC filter 226 for processing the received signal 202. The MMSE burst module 512 can also calculate a data channel estimation 514. The data channel estimation 514 can be coupled to the data output equalizer 232 to provide the additional correction of the corrected burst 230 for processing the corrected burst data 234.

It has been discovered that the iterative quasi-linear receiver 501 can apply quasi-linear processing, through the Filter weights ESTIM 502 and the channel and interference ESTIM 504, to the received signal 202 in order to improve reliable receipt of the unaltered transmission 112 of FIG. 1 in noise-limited and interference-limited environments. The iterative quasi-linear receiver 201 can correct inter-symbol interference (ISI) and co-channel interference (CCI) to a degree not possible in blind conversion receivers. The application of the iterative quasi-linear receiver 501 can allow increased capacity of the wireless communication system 100 of FIG. 1 because an increase in frequency, which will provide time for more of the selected bursts, is now possible without increasing the error rates in the arriving communication 114.

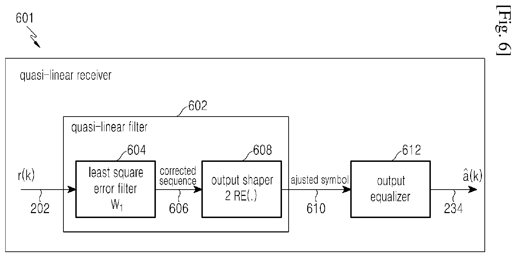

FIG. 6 is an exemplary block diagram of a quasi-linear receiver in a third embodiment of the of the wireless communication system.

Referring now to FIG. 6, therein is shown an exemplary block diagram of a quasi-linear receiver 601 in a third embodiment of the of the wireless communication system 100. The exemplary block diagram of the quasi-linear receiver 601 depicts the received signal 202, such as the radio frequency signal meeting the Enhanced Rates for GSM Evolution (EDGE) standard, coupled to a quasi-linear filter 602. The quasi-linear filter 602 can include a lease square error filter 604 that can calculate the filter weights 210 of FIG. 2 by minimizing the least square error for the test sequence 414 of FIG. 4 as:

$$e = \frac{1}{26} \sum_{k=d}^{26-d} \left\| y(k) - s(k+k_0) \right\|^2$$

Where $k_0$ is the decision delay for circuit processing and the correlation function is calculated by:

$$\Phi_{rr} = \frac{1}{26 - 2d} \sum_{k=d+1}^{26-d} \mathbf{r}_k \mathbf{r}_k^{H}$$

$$\Phi_{rr^*} = \frac{1}{26 - 2d} \sum_{k=d+1}^{26-d} \mathbf{r}_k \mathbf{r}_k^{T}$$

$$\varphi_{rs}(k_0) = \frac{1}{26 - 2d} \sum_{k=d+1}^{26-d} \mathbf{r}_k s^*(k + k_0)$$

$$\varphi_{r^*s}(k_0) = \frac{1}{26 - 2d} \sum_{k=d+1}^{26-d} \mathbf{r}_k^* s^*(k + k_0)$$

And the filter weights 210 can be calculated as:

$$\mathbf{W}_1 = \left[ \mathbf{\Phi}_{rr} - \mathbf{\Phi}_{rr^*} \mathbf{\Phi}^{-*}_{rr} \mathbf{\Phi}^{*}_{rr^*} \right]^{-1} \left[ \varphi_{rs} - \mathbf{\Phi}_{rr^*} \mathbf{\Phi}^{-*}_{rr} \varphi_{r^*s} \right]$$

$$\mathbf{W}_1 = \mathbf{W}_2^*$$

The least square error filter 604 can product a corrected sequence 606 coupled to an output shaper 608. The corrected sequence 606 can have the CCI and the ISI removed. The output shaper 608 can operate on the $m^{th}$ symbol of the test sequence 414, $r_m$, to form an adjusted symbol $y(m)$ 610 as:

$$y(m) = 2\,\mathrm{Re}(\mathbf{w}_1^H \mathbf{r}_m)$$

Where the function "2Re" is twice the real number result without having an imaginary component.

The adjusted symbol 610 can be coupled to an output equalizer 612, such as a slicer or a minimum mean squared error equalizer. The output equalizer 612 can operate at a frequency of at least twice the symbol rate of the adjusted symbol 610. The combination of the quasi-linear filter 602 and the output equalizer 612 can product the corrected burst data 234. It is understood that the description of the quasi-linear filter 602 was shown for the test sequence 414 but can operate on the selected burst 406 as well.

It has been discovered that the quasi-linear receiver 601 can simplify the functional implementation of a receiver similar to the iterative quasi-linear receiver 201. The selection of the implementation of the quasi-linear receiver 601 can be dependent on the amplitude of the signal to interference ratio (SIR) being low.

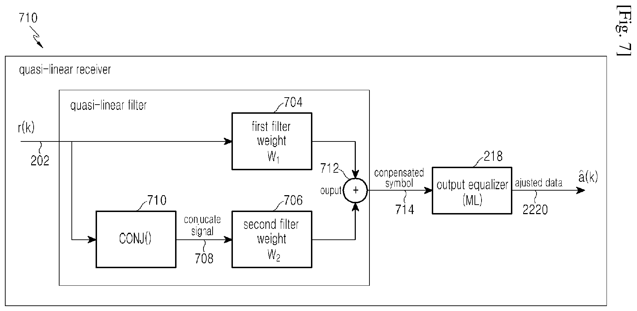

FIG. 7 is a an exemplary block diagram of a quasi-linear receiver in a fourth embodiment of the of the wireless communication system.

Referring now to FIG. 7, therein is shown an exemplary block diagram of a quasi-linear receiver 701 in a fourth embodiment of the of the wireless communication system 100. The exemplary block diagram of the quasi-linear receiver 701 depicts the received signal 202, such as the radio frequency signal meeting the Enhanced Rates for EDGE standard, coupled to a quasi-linear filter 702. The quasi-linear filter 702 can apply a first filter weight 704 to the received signal 202 and a second filter weight 706 to a conjugate signal 708 formed from applying the received signal 202 to a conjugate module 710.

The first filter weight 704 and the second filter weight 706 can be calculated by equation 2 through equation 5. The output of the first filter weight 704 can be added by an adder 712 to the output of the second filter weight 706. The second filter weight 706 when applied to the conjugate signal 708 can be added to first filter weight 704 applied to the received signal 202 to cancel the ISI and CCI present in the received signal 202.

A compensated symbol 714 can be the output of the adder 712 which is coupled to the output equalizer 218. The output equalizer 218 can adjust the compensated symbol 714 in order to calculate the adjusted data 220, which can accurately reflect the unaltered transmission 112 of FIG. 1.

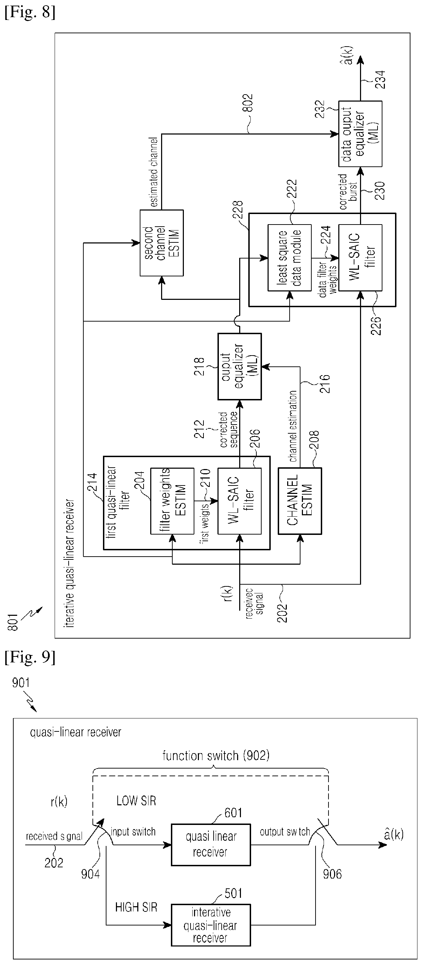

Referring now to FIG. 8, therein is shown an exemplary block diagram of an iterative quasi-linear receiver 801 in a fifth embodiment of the wireless communication system 100. The exemplary block diagram of the iterative quasi-linear receiver 801 depicts depicts the received signal 202, such as a radio frequency signal meeting the Enhanced Rates for EDGE standard, coupled to the filter weights ESTIM 204, the WL_SAIC filter 206, and the channel ESTIM208. The filter weights ESTIM204 can calculate the filter weights 210 which can be calculated by minimizing the least squared error $e$ as calculated by equation 2.

The filter weights 210, from the filter weights ESTIM204, can be coupled between the filter weights ESTIM204 and the WL_SAIC filter 206. The WL_SAIC filter 206 can perform correction of the inter-symbol interference and co-channel interface that is part of the received signal 202. The WL_SAIC filter 206 can be a MMSE filter that can adapt using the filter weights 210 and generating further refinements applied directly to the received signal 202. The mean squared error (MSE) can be calculated by equation 6.

The interference estimated vector that can be applied to the received signal 202 in order to produce the corrected sequence 212. The combination of the filter weights estimation module 204 and the WL_SAIC filter 206 can form the first quasi-linear filter 214. The first quasi-linear filter 214 can provide correction for the ISI and CCI monitored during the test sequence provide in the center of the burst. Since the channel 112 and the CCI are constant during the burst.

The channel estimation module 208 can calculate the channel estimation 216. The channel estimation 216 and the corrected sequence 212 are coupled to the first output equalizer 218. The output equalizer 218 can apply additional correction to the received signal 202 based on the correction derived from the test sequence symbols by the first quasi-linear filter 214.

The first output equalizer 218 can be restricted to operate on the test sequence, which represents a 26 symbol reference field positioned in the middle of the selected burst 406. The test sequence can induce a direct current (DC) offset that can corrupt the decoding of encrypted data that can be present in data fields surrounding the test sequence. The encrypted data is known to be balanced by the encryption process to eliminate the DC offset issue. The output of the first output equalizer 218 can be the adjusted data 220 that can accurately reflect the 26 symbols of the test sequence 414 of FIG. 4.

The adjusted data 220 and the received signal 202 can be coupled to the least square data module 222. The data filter weights module 222 can calculate the data filter weights 224 in a manner similar to the filter weights estimation module 204, with the exception that the calculation includes all of the symbols in the selected burst 406. By way of example, the least squared data module 222 can calculate the data filter weights 210 by minimizing the least squared error $e$ as calculated by equation 10 to include the 148 symbols of the selected burst 406 of FIG. 4.

The least squared data module 222 can substitute the adjusted data 220 for the test sequence 414 embedded in the received signal 202 when calculating the data filter weights 224. The least squared data module 222 can calculate the correlation terms in a similar way to the filter weights estimation module 204, with the exception that the calculation includes all of the symbols in the selected burst 406, can be calculated by equation 10.

The data filter weights 224 can be coupled to the data WL-SAIC filter 226. The data WL-SAIC filter 226 can calculate the minimum MSE in a manner similar to the WL_SAIC filter 206, with the exception that the entire content of the selected burst 406 is analyzed causing the Interference covariance matrix estimation to be calculated by equation 12.

The combination of the least squared data module 222 and the data WL-SAIC filter 226 can comprise the data quasi-linear filter 228. The data quasi-linear filter 228 can perform a correction of the entire content of the selected burst 406.

The correction of the received signal 202 by the data WL-SAIC filter 226 can produce the corrected burst 230. The corrected burst 230 can be coupled to the data output equalizer 232. The data output equalizer 232 can apply additional correction to the received signal 202 based on an estimated channel 802, provided by a second channel ESTIM804, and the correction derived from the entire content of the selected burst 406 by the data quasi-linear filter 228. The data output equalizer 232 can apply a correction based on all of the 148 symbols of the selected burst 406.

The output of the data output equalizer 232 can be the corrected burst data 234 that can accurately reflect the 148 symbols of the selected burst 406. The corrected burst data 234 can deliver the encrypted data within the selected burst 406 for utilization within the mobile device 102 of FIG. 1. The mobile device 102 can utilize the encrypted data for display or audio purposes.

FIG. 9 is an exemplary block diagram of a quasi-linear receiver in a sixth embodiment of the wireless communication system.

Referring now to FIG. 9, therein is shown an exemplary block diagram of a quasi-linear receiver 901 in a sixth embodiment of the wireless communication system 100. The exemplary block diagram of a quasi-linear receiver 901 depicts the received signal 202, such as a radio frequency signal meeting the Enhanced Rates for EDGE standard, coupled to a function switch 902 having an input switch 904 and an output switch 906.

The input switch 904 is selectively coupling the quasi-linear receiver 601 or the iterative quasi-linear receiver 501 to the received signal 202. The operation of the function switch 902 selects the output of the quasi-linear receiver 601 or the iterative quasi-linear receiver 501 at the same time the received signal 202 is coupled to the input of the quasi-linear receiver 601 or the iterative quasi-linear receiver 501.

It has been discovered that the function switch 902 can adapt the quasi-linear receiver 901 to address an environment having both a low signal to interference ratio and a high signal to interference ratio. The environmental change of the channel 108 does not change during the period of time required to process the selected burst 406.

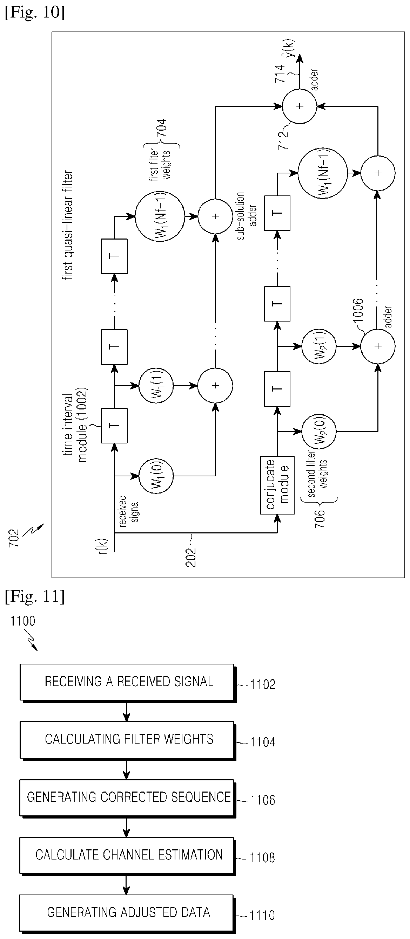

FIG. 10 is a detailed block diagram of the quasi-linear filter of FIG. 7. Referring now to FIG. 10, therein is shown a detailed block diagram of the quasi-linear filter 702 of FIG. 7. The detailed block diagram of the first quasi-linear filter 702 depicts the received signal 202 coupled to the conjugate module 710, one of the first filter weights 704, and a time interval module 1002.

The time interval module 1002 can hold an amplitude of the received signal 202 over the duration of the time interval defined by the time interval module 1002. The output of an initial instance of the time interval module 1002 is passed to the next successive instance of the time interval module 1002. The progression of the amplitude is subjected to the first filter weights 704 associated with the individual instance of the time interval module 1002. Each of the first filter weights 704 can scale the amplitude associated with the input of a successive instance of the time interval module 1002.

A sub-solution adder 1004 can receive an input from an instance of the first filter weights 704 and the output of an instance of the sub-solution adder 1004. The last instance in a serial string of the sub-solution adder 1004 can be coupled to the adder 712.

The conjugate module 710 can input the received signal 202 and output the conjugate signal 708, which is the same amplitude as the received signal 202 but in the opposite polarity. The conjugate signal 708 can be coupled to a serial string of the time interval module 1002. The second filter weights 706 are successively coupled to the inputs of the serial string of the time interval module 1002.

The time interval module 1002 can hold an amplitude of the conjugate signal 708 over the duration of the time interval defined by the time interval module 1002. The output of an initial instance of the time interval module 1002 is passed to the next successive instance of the time interval module 1002. The progression of the amplitude is subjected to the second filter weights 706 associated with the individual instance of the time interval module 1002. Each of the second filter weights 706 can scale the amplitude associated with the input of a successive instance of the time interval module 1002.

A conjugate sub-solution adder 1006 can be coupled to an instance of the second filter weights 704 and the output of an instance of the conjugate sub-solution adder 1006. The last instance in a serial string of the conjugate sub-solution adder 1006 can be coupled to the adder 712. The combination of the output of the serial string of the conjugate sub-solution adder 1006 and the serial string of the sub-solution adder 1004 through the adder 712 can produce the compensated symbol 714.

Fig. 11 is a flow chart of a method of operation of a wireless communication system in an embodiment of the present invention.

Referring now to FIG. 11, therein is shown a flow chart of a method 1100 of operation of a wireless communication system 100 in an embodiment of the present invention. The method 1100 includes: receiving a received signal in a block 1102; calculating filter weights, by a filter weights estimation module, from the received signal in a block 1104; generating a corrected sequence, through a WL-SAIC module, by applying the filter weights in a block 1106; calculating a channel estimation concurrently with the corrected sequence in a block 1108; and generating an adjusted data, by an output equalizer, including applying the channel estimation to the corrected sequence in a block 1110.

The embodiment of the present invention provides that the iterative quasi-linear receiver 201 can apply quasi-linear processing, through the first quasi-linear filter 214 and the data quasi-linear filter 228, to the received signal 202 in order to improve reliable receipt of the unaltered transmission 112 of FIG. 1 in noise-limited and interference-limited environments. The iterative quasi-linear receiver 201 can correct inter-symbol interference (ISI) and co-channel interference (CCI) to a degree not possible in blind conversion receivers. The application of the iterative quasi-linear receiver 201 can allow increased capacity of the wireless communication system 100 of FIG. 1 because an increase in frequency, which will provide time for more of the selected burst 406, is now possible without increasing the error rates in the arriving communication 114.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters set forth herein or shown in the accompanying drawings are to be interpreted in an illustrative and non-limiting sense.

**Claims**

1. A receiver (201) for cancelling interference from a received signal (202) in wireless communication system, the receiver comprising:

   a filter weights estimation module (204) configured to generate filter weights from the received signal;
   a widely linear single antenna interference cancellation, WL-SAIC, module (206), coupled to the filter weights estimation module, configured to process the received signal;
   a channel estimation module (208) configured to calculate a channel estimation (216) from the received signal;
   an output equalizer (218), coupled to the WL-SAIC module and the channel estimation module, configured to generate an adjusted data (220);
   the receiver **characterized in** comprising:

   a data filter weights module (222), coupled to the output equalizer, configured to calculate data filter weights from the received signal and the adjusted data; and
   a data WL-SAIC filter (226), coupled to the data filter weights module (222), configured to input the received signal (202) and output a corrected burst (230).

2. The receiver as claimed in claim 1, further comprising a data output equalizer (232), coupled to the channel estimation module (208), configured to apply additional correction to the corrected burst (230) and output a corrected burst data (234).

3. The receiver as claimed in claim 1 wherein the combination of the filter weights estimation module and the WL-SAIC module forms a quasi - linear filter (214) configured to output a corrected sequence (212) to the output equalizer.

4. A method for cancelling interference from a received signal in a wireless communication system, the method comprising:

   processing the received signal;
   calculating (1104) filter weights, by a filter weights estimation module, from the received signal;
   generating (1106) a corrected sequence, through a widely linear single antenna interference cancellation, WL-SAIC, module, by applying the filter weights;
   calculating (1108) a channel estimation concurrently with the corrected sequence;
   generating (1110) an adjusted data by an output equalizer including applying the channel estimation to the corrected sequence;
   the method **characterized in:**

   calculating data filter weights from the received signal and the adjusted data, by a data filter weights module; and
   producing a corrected burst from the received signal by a data WL_SAIC filter applying the calculated data filter weights.

5. The method as claimed in claim 4, further comprising outputting a corrected burst data by coupling a data output equalizer to the corrected burst.

6. The method as claimed in claim 4, wherein generating the corrected sequence, through the WL-SAIC module, by applying the filter weights includes providing a quasi-linear filter.

**Patentansprüche**

1. Empfänger (201) zum Unterdrücken von Interferenzen aus einem empfangenen Signal (202) in einem drahtlosen Kommunikationssystem, wobei der Empfänger Folgendes umfasst:

   ein Abschätzungsmodul der Filtergewichtungen (204), das zum Erzeugen von Filtergewichtungen aus dem empfangenen Signal konfiguriert ist;
   ein Modul mit weitgehend linearer Einzelantennen-Interferenzunterdrückung, WL-SAIC, (WL-SAIC-Modul) (206), das mit dem Abschätzungsmodul der Filtergewichtungen gekoppelt ist, und zum Verarbeiten des empfangenen Signals konfiguriert ist;

ein Kanalabschätzungsmodul (208), das konfiguriert ist, um eine Kanalabschätzung (216) aus dem empfangenen Signal zu berechnen;

einen Ausgangsentzerrer (218), der mit dem WL-SAIC-Modul und dem Kanalabschätzungsmodul gekoppelt und konfiguriert ist, um angepasste Daten (220) zu erzeugen;

wobei der Empfänger **dadurch gekennzeichnet ist, dass** er Folgendes umfasst:

ein Datenfiltergewichtungsmodul (222), das mit dem Ausgangsentzerrer gekoppelt und konfiguriert ist, um Datenfiltergewichtungen aus dem empfangenen Signal und den eingestellten Daten zu berechnen; und

einen Daten-WL-SAIC-Filter (226), der mit dem Datenfiltergewichtungsmodul (222) gekoppelt und konfiguriert ist, um das empfangene Signal (202) einzugeben und einen korrigierten Burst (230) auszugeben.

2. Empfänger nach Anspruch 1, der des Weiteren einen Datenausgangsentzerrer (232) umfasst, der mit dem Kanalabschätzungsmodul (208) gekoppelt ist und der konfiguriert ist, um eine zusätzliche Korrektur auf den korrigierten Burst (230) anzuwenden und um korrigierte Burstdaten (234) auszugeben.

3. Empfänger nach Anspruch 1, wobei die Kombination des Filtergewichtungs-Schätzmoduls und des WL-SAIC-Moduls einen quasi-linearen Filter (214) bildet, der zum Ausgeben einer korrigierten Sequenz (212) an den Ausgangsentzerrer konfiguriert ist.

4. Verfahren zum Unterdrücken von Interferenzen aus einem empfangenen Signal in einem drahtlosen Kommunikationssystem, wobei das Verfahren Folgendes umfasst:

Verarbeiten des empfangenen Signals;

Berechnen (1104) von Filtergewichtungen durch ein Filtergewichtsabschätzungsmodul aus dem empfangenen Signal;

Erzeugen (1106) einer korrigierten Sequenz durch ein Modul mit weitgehend linearer Einzelantennen-Interferenzunterdrückung, WL-SAIC, (WL-SAIC-Modul) durch Anwenden der Filtergewichtungen;

Berechnen (1108) einer Kanalabschätzung gleichzeitig mit der korrigierten Sequenz;

Erzeugen (1110) angepasster Daten durch einen Ausgangsentzerrer, einschließlich Anwenden der Kanalabschätzung auf die korrigierte Sequenz;

wobei das Verfahren **gekennzeichnet ist durch**:

Berechnen von Datenfiltergewichtungen aus dem empfangenen Signal und den eingestellten Daten **durch** ein Datenfiltergewichtungsmodul; und

Erzeugen eines korrigierten Bursts aus dem empfangenen Signal **durch** einen Daten-WL_SAIC-Filter, der die berechneten Datenfiltergewichtungen anwendet.

5. Verfahren nach Anspruch 4, dass des Weiteren eine Ausgabe von korrigierten Burst-Daten durch Koppeln eines Datenausgangsentzerrers mit dem korrigierten Burst umfasst.

6. Verfahren nach Anspruch 4, wobei das Erzeugen der korrigierten Sequenz durch das WL-SAIC-Modul durch Anwenden der Filtergewichtungen das Bereitstellen eines quasi-linearen Filters umfasst.

**Revendications**

1. Récepteur (201) pour annuler des interférences d'un signal reçu (202) dans un système de communication sans fil, le récepteur comprenant :

un module d'estimation de pondérations de filtre (204) configuré pour générer des pondérations de filtre à partir du signal reçu ;

un module d'annulation d'interférences d'antenne unique largement linéaire, WL-SAIC, (206), couplé au module d'estimation de pondérations de filtre, configuré pour traiter le signal reçu ;

un module d'estimation de canal (208) configuré pour calculer une estimation de canal (216) à partir du signal reçu ;

un égaliseur de sortie (218), couplé au module WL-SAIC et au module d'estimation de canal, configuré pour générer des données ajustées (220) ;

le récepteur **caractérisé en ce qu'**il comprend :

un module de pondération de filtre de données (222), couplé à l'égaliseur de sortie, configuré pour calculer des pondérations de filtre de données du signal reçu et des données ajustées ; et
un filtre WL-SAIC de données (226), couplé au module de pondération de filtre de données (222), configuré pour entrer le signal reçu (202) et délivrer en sortie un paquet corrigé (230).

2. Récepteur selon la revendication 1, comprenant en outre un égaliseur de sortie de données (232), couplé au module d'estimation de canal (208), configuré pour appliquer une correction additionnelle au paquet corrigé (230) et pour délivrer en sortie des données de paquet corrigé (234).

3. Récepteur selon la revendication 1 où la combinaison du module d'estimation de pondérations de filtre et le module WL-SAIC forme un filtre quasi-linéaire (214) configuré pour délivrer en sortie une séquence corrigée (212) à l'égaliseur de sortie.

4. Procédé pour annuler des interférences d'un signal reçu dans un système de communication sans fil, le procédé comprenant :

traiter le signal reçu ;
calculer (1104) des pondérations de filtre, par un module d'estimation de pondérations de filtre, à partir du signal reçu ;
générer (1106) une séquence corrigée, via un module d'annulation d'interférences d'antenne unique largement linéaire, WL-SAIC, en appliquant les pondérations de filtre ;
calculer (1108) une estimation de canal simultanément à la séquence corrigée ;
générer (1110) des données ajustées avec un égaliseur de sortie incluant l'application de l'estimation de canal à la séquence corrigée ;
le procédé étant **caractérisé par** :

le calcul de pondérations de filtre de données du signal reçu et des données ajustées, par un module de pondération de filtre de données ; et
la production d'un paquet corrigé à partir du signal reçu par un filtre de données WL_SAIC en appliquant les pondérations de filtre de données calculées.

5. Procédé selon la revendication 4, comprenant en outre l'émission de données de paquet corrigé en couplant un égaliseur de sortie de données au paquet corrigé.

6. Procédé selon la revendication 4, où la génération de la séquence corrigée, à travers le module WL-SAIC, en appliquant les pondérations de filtre comprend la fourniture d'un filtre quasi-linéaire.

[Fig. 1]

[Fig. 2]

[Fig. 3]

[Fig. 4]

TDMA FRAME (401)

404

GSM FRAME (402)

TIME SLOT

410  412  414

TAIL BITS | ENCRYPTED DATA | FLAG BITS | TEST SEQUENCE | BURST (406)

408

416  418

ISI FIELD | OFFSET ADJUSTMENT FIELD

[Fig. 5]

[Fig. 6]

quasi-linear receiver

602

quasi-linear filter

r(k)

604

least square error filter

W₁

corrected sequence

608

output shaper 2 RE(.)

ajusted symbol

612

output equalizer

â(k)

601

202

606

610

234

[Fig. 7]

quasi-linear receiver

710

quasi-linear filter

r(k) — 202

710 — CONJ()

conucate signal — 708

704 — first filter weight $W_1$

706 — second filter weight $W_2$

712 — ouput

+

compensated symbol — 714

218 — output equalizer (ML)

ajusted data — 2220

$\hat{a}(k)$

[Fig. 8]

[Fig. 9]

[Fig. 10]

[Fig. 11]

| RECEIVING A RECEIVED SIGNAL | ~1102 |
| CALCULATING FILTER WEIGHTS | ~1104 |
| GENERATING CORRECTED SEQUENCE | ~1106 |
| CALCULATE CHANNEL ESTIMATION | ~1108 |
| GENERATING ADJUSTED DATA | ~1110 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7565111 B2, ONGGOSANUSI EKO N
- US 2006109938 A1, CHALLA RAGHU
- US 2010046682 A1, SIKRI DIVAYDEEP

**Non-patent literature cited in the description**

- **OLIVIER J. C. et al.** Single antenna interference cancellation for synchronised GSM networks using a widely linear receiver. *IET Communications,* 01 February 2007, vol. 1 (1), 131-136